Europäisches Patentamt

European Patent Office

Office européen des brevets

(19)

(11) Veröffentlichungsnummer: **0 066 797**
A1

## (12) EUROPÄISCHE PATENTANMELDUNG

(21) Anmeldenummer: 82104648.9

(22) Anmeldetag: 27.05.82

(51) Int. Cl.³: **B 24 B 1/00,** B 24 B 3/00, B 23 P 1/08

(30) Priorität: 05.06.81 DE 3122429

(43) Veröffentlichungstag der Anmeldung: 15.12.82 Patentblatt 82/50

(84) Benannte Vertragsstaaten: IT

(71) Anmelder: LACH-SPEZIAL-Werkzeuge GmbH, Bruchköbeler Landstrasse 39-41, D-6450 Hanau/Main (DE)

(72) Erfinder: Lach, Horst, Dammstrasse 5, D-6450 Hanau/Main 1 (DE)

(74) Vertreter: Strasse, Joachim, Strasse & Stoffregen, Patentanwälte Zweibrückenstrasse 15, D-8000 München 2 (DE)

(54) Verfahren und Vorrichtung zum Nachschleifen von Werkzeugen.

(57) Zur Erzielung einer hohen Genauigkeit und Güte erfolgt das Nachschleifen von mit polykristallinem synthetischem Diamant bestückten Werkzeugen mittels Drahterodieren, wobei an und für sich bekannte Schleif- oder Schärfmaschinen Verwendung finden können, bei denen die Diamantschleifscheiben durch eine Drahterodiervorrichtung ersetzt werden.

STRASSE & STOFFREGEN                    0066797

Patentanwälte · European Patent Attorneys

Dipl.-Ing. Joachim Strasse, München · Dipl.-Phys. Dr. Hans-Herbert Stoffregen, Hanau

Zweibrückenstraße 15 · D-8000 München 2 (Gegenüber dem Patentamt) · Telefon (089) 22 25 96 · Telex 5 22 054

- / -

Lach Spezial-Werkzeuge GmbH

Bruchköbeler Landstraße 39-41          München, 27. Mai 1982

6450 Hanau/Main 1                              str-ks 14 09 5


Verfahren und Vorrichtung zum Nachschleifen
von Werkzeugen

Die Erfindung bezieht sich auf ein Verfahren zum Nachschleifen von aus polykristallinem sythetischem Diamant bestehenden Schneidflächen von vorzugsweise ein- oder mehrschneidigen, starren oder umlaufenden, profilierten oder unprofilierten Werkzeugen sowie auf eine Vorrichtung zur Durchführung des Verfahrens.

Um abgenutzte Schneidflächen von zum Beispiel Dreh-, Bohr-, Fräs-, Säge- oder Hobelwerkzeugen instandzusetzen, werden die Schneidflächen nachgeschärft. Ein solches Nachschleifen erfolgt vorzugsweise mittels Schleif- oder Schärfmaschinen, die eine Aufnahmevorrichtung für das nachzuschleifende Werkzeug sowie eine vorzugsweise auf einem Schlitten manuell oder automatisch bewegbaren Schleifeinrichtung, die eine Diamantschleifscheibe aufweisen kann. Das Nachschleifen erfolgt dann im Pendel- oder Tiefschliffverfahren. Entsprechende Schleifvorrichtungen und -verfahren haben sich bei dem Nachschärfen von Hartmetallschneidflächen weitgehend bewährt. Schwierigkeiten bereitet jedoch das Nachschärfen von profilierten Schneidflächen. So können häufig die bekannten Schärf- oder Schleifmaschinen mit einer Diamantschleifscheibe nicht eingesetzt werden, da das gesamte Profil aufgrund der vorgegebenen Geometrie der Schneidflächen des nachzuschärfenden Werkzeugs durch die vorgegebene Geometrie der schärfenden Diamantscheibe nicht abgefahren werden kann.

Des weiteren ist festzustellen, daß es mit den bekannten Schleifmaschinen recht zeitaufwendig ist, wenn zum Beispiel die Zahnbrust und der Zahnrücken von Kreissägeblättern nachgeschärft werden sollen, da nur in getrennten Arbeitsgängen die entsprechenden Schneidflächen bearbeitet werden können.

Das Nachschleifen von diamantbestückten Werkzeugen wie zum Beispiel Diamant-Fräsern, Diamant-Zerspanern oder -Sägeblättern mit Diamantschleifscheiben ist mit überaus großen Schwierigkeiten verbunden, da Materialien gleicher Härte aufeinander einwirken, so daß hohe Standzeiten der Diamantschleifscheiben erzielt werden. Daher sind die bekannten Schleif- oder Schärfmaschinen auch grundsätzlich nur zum Instandsetzen von vorwiegend hartmetallbestückter Werkzeuge ausgerichtet.

Aufgabe der vorliegenden Erfindung ist es, ein Verfahren zur Verfügung zu stellen, mit Hilfe dem ein problemloses Nachschleifen von mit polykristallinem synthetischen Diamant bestückten Werkzeugen mit einer hohen Bearbeitungsgüte erfolgen kann, wobei selbst eine vorhandene Profilierung der Schneidflächen den Nachschleifprozeß nicht beeinflussen soll.

Die Aufgabe wird erfindungsgemäß dadurch gelöst, daß die Schneidflächen drahtfunkenerosiv bearbeitet werden.

Man geht demzufolge von dem bekannten mechanischen Nachschleifen ab, um eine einwandfreie Instandsetzung zu erzielen, wobei ein unmittelbarer Kontakt zwischen zu schleifendem Werkzeug und Schleifwerkzeug nicht erfolgt. Daraus ergibt sich auch der Vorteil, daß die Werkzeuge, wie zum Beispiel Sägeblätter oder Fräser nicht von aufwendigen Einspannvorrichtungen aufgenommen werden müssen, was erforderlich ist, wenn entsprechend diamantbestückte Werkzeuge von einer Diamantschleifscheibe nachbearbeitet werden sollen. Dabei kann das drahterosive Bearbeiten mit an und für sich bekannten Drahterodiervorrichtungen erfolgen, die zum Beispiel beim Profilieren von Hartmetallwerkstoffen Einsatz finden.

In Ausgestaltung der Erfindung wird vorgeschlagen, gleichzeitig mehrere über- oder nebeneinander angeordnete Werkzeuge drahterosiv zu bearbeiten, wodurch sich eine im Vergleich zu den konventionellen Verfahren die Dauer der Instandsetzungsarbeiten erheblich verkürzt.

Nach einer weiteren Ausgestaltung des erfindungsgemäßen Verfahrens zum Nachschleifen der Zahnbrust und des Zahnrückens von Sägeblättern wird vorgeschlagen, das drahtfunkenerosive Bearbeiten dieser Schneidflächen in einem einzigen Arbeitsgang vorzunehmen, was nach den bekannten, Diamantschleifscheiben benutzenden Verfahren ausgeschlossen ist.

Nach der erfindungsgemäßen Lehre zeichnet sich die Vorrichtung zur Durchführung des Verfahrens im Vergleich zu den bekannten Schleif- oder Schärfvorrichtungen, die jeweils zumindest eine Schleifscheibe, eine Halterung für das nachzuschleifende Werkzeug, Flüssigkeitsführungen zur Abgabe der Flüssigkeit an den Bearbeitsort sowie eine Auffangvorrichtung für die Flüssigkeit umfassen, dadurch aus, daß die Schleifscheibe durch eine Drahterodiervorrichtung ersetzt ist, der das nachzuschärfende Werkzeug als Gegenelektrode zugeordnet ist, und daß die Flüssigkeit ein Dielektrikum ist.

Demzufolge weicht die erfindungsgemäße Vorrichtung von dem Bekannten im wesentlichen dadurch ab, daß die Schleifscheibe und deren Antriebsvorrichtungen durch eine Drahterodiervorrichtung ersetzt wird, die in Bezug auf das nachzuschärfende Werkzeug derart einstellbar ist, daß der vorzugsweise aus Messing bestehende Elektrodendraht in Bezug auf die Schneidfläche beliebige Positionen einnehmen kann.

Das Ersetzen kann vorteilhafterweise durch Auswechseln geschehen, so daß die eine Maschine für unterschiedliche Anwendungsarten verfügbar bleibt, wobei anstelle der auswechselbaren Bearbeitungsstationen auch eine optische Meßeinrichtung in die Maschine eingesetzt werden kann.

Hinsichtlich der Führung und des Sammeln des zum Drahterodieren erforderlichen Dielektrikums finden die bekannten Kühlflüssigkeitseinrichtungen der Schleif- bzw. Schärfvorrichtung Verwendung.

Weitere Einzelheiten, Vorteile und Merkmale der Erfindung ergeben sich aus der nachfolgenden Beschreibung eines bevorzugten Ausführungsbeispiels.

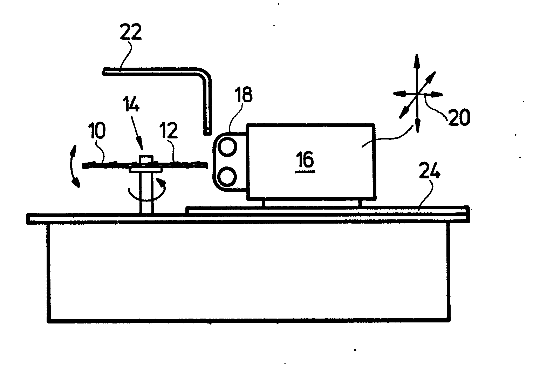

Der einzigen Figur ist eine Prinzipdarstellung einer Schleifvorrichtung zum Nachschärfen von Werkzeugen zu entnehmen, wobei im Ausführungsbeispiel ein Sägeblatt 10 instandgesetzt werden soll. Von dem Sägeblatt 10 sollen die Schneidflächen 12 bearbeitet werden. Zu diesem Zweck wird das Sägeblatt 10 von einer Halterung 14 aufgenommen, die -wie bei den bekannten Maschinen- parallel und senkrecht zu der Sägeblattachse verdreht bzw. verkippt werden kann. Das Nachschärfen der Schneidflächen 12 erfolgt nun

- 5 -

mittels funkenerosiven Bearbeitens und zwar mittels Drahterodierens. Zu diesem Zweck ist eine an und für sich bekannte Drahterodiervorrichtung 16 derart zum Sägeblatt 10 angeordnet, daß ein Draht 18, der vorzugsweise ein Messingdraht ist, derart in Bezug auf die Schneideflächen 12 ausgerichtet werden kann, daß unabhängig von deren Profil das erforderliche Nachschärfen erfolgen kann. Zu diesem Zweck ist die Drahterodiervorrichtung 16 vorzugsweise auf einem Schlitten 20 verschiebbar angeordnet und kann außerdem in Bezug auf diesen noch gekippt werden (durch die Pfeile angedeutet). Das zum funkenerosiven Schleifen erforderliche Dielektrikum wird über eine Leitung 22 zum Bearbeitungsort zwischen dem Draht 18 und der mit diesem in elektrische Verbindung tretenden Sägezahn abgegeben, wobei als die das Dielektrikum führenden Leitungen 22 die von den bekannten Schleif- oder Schärfmaschinen vorhandene Kühlflüssigkeitsschläuche Verwendung finden können.

Das von der Leitung 22 abgegebene Dielektrikum kann sodann in einer Wanne 24 aufgefangen werden, um erneut als wirksames Dielektrikum zwischen Draht 18 und dem Sägezahn 12, der elektrisch gesehen der Gegenpol zu jenem ist, verwendet zu werden.

Vorzugsweise ist die Drahterodiervorrichtung 16 vollautomatisch gesteuert, um ein optimales und schnelles Nachschärfen von Werkzeugen zu ermöglichen. Zu diesem Zweck ist dann auch die Dreheinrichtung derart getaktet, daß nach dem Nachschärfen eines Sägezahns das Sägeblatt 10 derart weitergedreht wird, daß der nächste Sägezahn drahterosiv bearbeitet werden kann.

Nach dem erfindungsgemäßen Verfahren können des weiteren gleichzeitig mehrere neben- oder übereinander angeordnete Werkzeuge nachgeschärft werden, wobei das Drahterodieren in an sich bekannter Weise ein- oder mehrkanalig erfolgen kann.

## STRASSE & STOFFREGEN

Patentanwälte · European Patent Attorneys

Dipl.-Ing. Joachim Strasse, München · Dipl.-Phys. Dr. Hans-Herbert Stoffregen, Hanau
Zweibrückenstraße 15 · D-8000 München 2 (Gegenüber dem Patentamt) · Telefon (089) 22 25 96 · Telex 5 22 054

0066797

Lach Spezial-Werkzeuge GmbH
Bruchköbeler Landstraße 39-41
6450 Hanau/Main 1

München, 27. Mai 1982

str-ks 14 095

Verfahren und Vorrichtung zum Nachschleifen
von Werkzeugen

P a t e n t a n s p r ü c h e

1. Verfahren zum Nachschleifen von aus polykristallinem synthetischen Diamant bestehenden Schneidflächen von vorzugsweise ein- oder mehrschneidigen, starren oder umlaufenden, profilierten oder unprofilierten Werkzeugen,
d a d u r c h  g e k e n n z e i c h n e t,
daß die Schneidflächen drahtfunkenerosiv bearbeitet werden.

2. Verfahren nach Anspruch 1,
d a d u r c h  g e k e n n z e i c h n e t,
daß mehrere nachzuschleifende Werkzeuge über- oder nebeneinander angeordnet gleichzeitig drahtfunkenerosiv bearbeitet werden.

3. Verfahren nach Anspruch 1 und/oder Anspruch 2 zum Nachschleifen von Zahnbrust und -rücken von zum Beispiel Sägeblättern,
d a d u r c h  g e k e n n z e i c h n e t,
daß das drahtfunkenerosive Bearbeiten der Zahnbrust und des Zahnrückens in einem Arbeitsgang erfolgt.

4. Vorrichtung zum Nachschleifen von aus polykristallinem synthetischem Diamant bestehenden Schneidflächen von vorzugsweise ein- oder mehrschneidigen, starren oder umlaufenden, profilierten oder unprofilierten Werkzeugen zur Durchführung des Verfahrens nach zumindest einem der Ansprüche 1 bis 3 umfassend zumindest eine Schleifscheibe, eine Halteeinrichtung für das nachzuschleifende Werkzeug, Flüssigkeitsführungen zur Abgabe der Flüssigkeit an den Bearbeitungsort sowie eine Auffangeinrichtung für die Flüssigkeit,
d a d u r c h   g e k e n n z e i c h n e t ,
daß die Schleifscheibe durch eine Drahterodiervorrichtung (16) ersetzt ist, der das Werkzeug (10) als Gegenelektrode zugeordnet ist, und daß die Flüssigkeit ein Dielektrikum ist.

5. Vorrichtung nach Anspruch 4,
d a d u r c h   g e k e n n z e i c h n e t ,
daß die Schleifscheibenanordnung und die Drahterodiervorrichtung (16) in der Vorrichtung gegeneinander auswechselbar sind.

6. Vorrichtung nach Anspruch 4,
d a d u r c h   g e k e n n z e i c h n e t ,
daß die Drahterodiervorrichtung (16) gegen eine optische Meßvorrichtung auswechselbar ist.

0066797

Europäisches
Patentamt

**EUROPÄISCHER RECHERCHENBERICHT**

0066797
Nummer der Anmeldung

EP 82 10 4648

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | PATENTS ABSTRACTS OF JAPAN, Band 5, Nr. 65 (M.66)(737), 30. April 1981<br>& JP - A - 56 15 925 (ASAHI DIAMOND KOGYO) (16-02-1981) | 1,4 | B 24 B 1/00<br>B 24 B 3/00<br>B 23 P 1/08 |
| | --- | | |
| A | FR-A-1 111 369 (BOCHUMER) | | |
| | --- | | |
| A | FR-A-2 349 396 (WESTERN ELECTRIC) | | |
| | --- | | |
| A | GB-A- 830 917 (SPARCATRON) | | |
| | --- | | |
| A | CH-A- 347 129 (INDUSTRIAL DISTRIBUTORS) | | |
| | ----- | | |

RECHERCHIERTE
SACHGEBIETE (Int. Cl. ³)

B 24 B
B 23 P

Der vorliegende Recherchenbericht wurde für alle Patentansprüche erstellt.

| Recherchenort | Abschlußdatum der Recherche | Prüfer |
|---|---|---|
| DEN HAAG | 24-08-1982 | PEETERS S. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03.82